# EUROPEAN PATENT SPECIFICATION

(11) **EP 2 436 724 B1**
(45) Date of publication and mention of the grant of the patent: **13.08.2014**
(21) Application number: 10780387.6
(22) Date of filing: 21.04.2010
(51) Int. Cl.: C08J 9/28, B32B 5/18, B32B 27/40, C08G 18/48

(54) **PROCESS FOR PRODUCING POROUS OBJECT, AND POROUS OBJECT, LAYERED PRODUCT, AND LEATHER-LIKE SHEET EACH OBTAINED THEREBY**
HERSTELLUNGSVERFAHREN FÜR EIN PORÖSES OBJEKT SOWIE PORÖSES OBJEKT, GESCHICHTETES PRODUKT UND LEDERÄHNLICHE STOFFBAHN, ALLESAMT MIT DIESEM VERFAHREN HERGESTELLT
PROCÉDÉ POUR LA PRODUCTION D'UN OBJET POREUX ET OBJET POREUX, PRODUIT STRATIFIÉ ET FEUILLE SEMBLABLE À DU CUIR OBTENUS CHACUN PAR CELUI-CI

(30) Priority: 25.05.2009 JP 2009125246
(43) Date of publication of application: 04.04.2012
(73) Proprietor: DIC Corporation, Tokyo 174-8520 (JP)
(72) Inventor: IWAO Takeshi, Takaishi-shi Osaka 592-0001 (JP); GOTOH Naotaka, Takaishi-shi Osaka 592-0001 (JP)
(74) Representative: Adam, Holger
(86) International application number: PCT/JP2010/057068
(87) International publication number: WO 2010/137430

(56) References cited:
- JP-A- 3 239 734
- JP-A- 61 072 033
- JP-A- 2005 213 411
- DATABASE WPI Week 199420 Thomson Scientific, London, GB; AN 1994-164517 XP002703342, -& JP H06 108368 A (KURARAY CO LTD) 19 April 1994 (1994-04-19)

## Description

### Technical Field

The present invention relates to a method for producing a porous material that can be applied to various fields including leather-like sheets such as synthetic leather sheets and artificial leather sheets and moisture-permeable waterproof materials.

### Background Art

Since polyurethane resin compositions can form cured products having high flexibility and strength, they have been conventionally used in various applications including adhesives, coating agents, and molding materials. In particular, to exploit the highly flexible texture of polyurethane resin compositions, polyurethane resin compositions are suitably used for producing porous materials that are applied to, for example, intermediate layers and surface layers of leather-like sheets, clothes, and moisture-permeable waterproof materials.

Conventionally known methods for producing porous materials from such polyurethane resin compositions include a dry method and a wet method.

As a method for forming a porous material by the dry method, for example, the following method is known: a water-in-oil dispersion mixture composed of an organic medium that has a boiling point of 120°C or less and can dissolve 1 to 50 g of water at 25°C, a polyurethane polymer having a predetermined amount of a polyoxyethylene group, and water is, for example, applied to a base material; and the base material is brought into contact with a specific curing agent for a short period of time to form a fine porous sheet (for example, refer to Patent Literature 1).

However, in the dry method, it is generally difficult to collect an organic solvent used in the production of a porous material. Accordingly, the dry method is not preferable in view of the recent trend toward reduction of environmental load. In addition, as for a porous material obtained by the dry method, pores are less likely to be formed in the surface of the porous material; and skinning is caused in the application of a polyurethane resin composition to the surface of a base material and aggregate tends to adhere to the surface of the resultant porous material, which may cause degradation of the production efficiency of the porous material.

As a method for forming a porous material by the wet method, for example, the following method for producing a wet-waterproofed cloth is known: a resin mixture containing a urethane resin for a moisture-permeable waterproof treatment, dimethylformamide, a crosslinking agent, and the like is applied to a base material, and the base material is immersed in a 10% aqueous solution of dimethylformamide to cure the resin (for example, refer to Patent Literature 2). The wet method is performed as a suitable method for producing a porous material in various applications because the way in which an organic solvent used in the production of a porous material is collected has been established to some extent and formation of pin holes and occurrence of skinning in the surface of the resultant porous material can be suppressed.

However, in a porous material obtained by the wet method, continuous pores that are a large number of pores in communication with each other and are formed in a porous material obtained by the dry method are not formed, but independent pores that are pores independently present tend to be formed. Accordingly, a porous material obtained by the wet method tends to be inferior to a porous material obtained by the dry method in moisture permeability. In particular, in the case of a film thickness more than about 100 µm as in a porous material constituting an intermediate layer of a leather-like sheet, there are cases where a porous material obtained by the wet method cannot provide moisture permeability that is practically sufficient.

Although an organic solvent used in the wet method can be collected and repeatedly used, there has been a trend that use of amide solvents such as dimethylformamide (DMF) commonly used as the organic solvent is strictly regulated by law because the amide solvents cause adverse effects on living things and environments. For example, in Europe, use of dimethylformamide is probably abolished by 2013.

Accordingly, at present, a method for producing a porous material without using amide solvents that may cause adverse effects on environments and the like such as dimethylformamide, by a wet method in which generation of aggregate is suppressed and very high moisture permeability is provided, has not yet been found.

### Citation List

### Patent Literature

PTL 1: Japanese Unexamined Patent Application Publication No. 51-41063
PTL 2: Japanese Unexamined Patent Application Publication No. 2007-169486

### Summary of Invention

### Technical Problem

An object of the present invention is to provide a method for producing a porous material having very high moisture permeability without using amide solvents that may cause adverse effects on environments and the like such as dimethylformamide, by a wet method without generation of aggregate and the like.

### Solution to Problem

The inventors of the present invention have studied how to achieve the object through selection from various organic solvents for the purpose of finding a solvent that can replace dimethylformamide, which has been conventionally used in the wet method. Specifically the inventors studied ester solvents such as ethyl acetate; however, in a porous material obtained by a wet method with such an ester solvent, pores are less likely to be uniformly formed in the porous material; in particular, when the porous material is a thick film, there are cases where considerable degradation of moisture permeability is caused.

The inventors noted that ketone solvents and the like have been conventionally used in the formation of porous materials by the dry method and they also studied use of ketone solvents such as methyl ethyl ketone instead of dimethylformamide.

However, the dry method is totally different from the wet method in the mechanism of forming a porous structure. Accordingly, by simply using methyl ethyl ketone or the like instead of dimethylformamide, pores are not uniformly formed in a porous material. In particular, when the porous material is a thick film, there are cases where moisture permeability that is practically sufficient cannot be maintained.

Thus, the inventors of the present invention studied how to form a desired porous material by a wet method even when a ketone solvent such as methyl ethyl ketone or an ester solvent is employed and used instead of dimethylformamide.

As a result, the inventors have found that a porous material having very high moisture permeability can be produced without generation of aggregate or the like even by a wet method through combined use of a urethane resin including a polyoxyethylene moiety serving as a resin for forming a porous layer and the ketone solvent or ester solvent.

Specifically, the present invention relates to a method for producing a porous material, the method including coating or impregnating a surface of a base material with a urethane resin composition containing a urethane resin (A) including a polyoxyethylene moiety and an organic solvent (B) that is one or more selected from the group consisting of a ketone solvent and an ester solvent, and subsequently bringing the coated surface or the impregnated surface into contact with water or water vapor to wet-cure the urethane resin (A).

The present invention also relates to a method for producing a porous material, the method including coating or impregnating a surface of a base material with a urethane resin composition containing a urethane resin (A) including a polyoxyethylene moiety, an organic solvent (B) that is one or more selected from the group consisting of a ketone solvent and an ester solvent, and a urethane resin (C) without a polyoxyethylene moiety, and subsequently bringing the coated surface or the impregnated surface into contact with water or water vapor to wet-cure the urethane resin (A) and the urethane resin (C).

Note that the term "porous" of a porous material according to the present invention means that the porous material has a large number of pores, the number being naturally achieved by curing the urethane resin composition by a wet method, and the porous material has moisture permeability due to the pores.

### Advantageous Effects of Invention

Use of a production method according to the present invention can provide a porous material by a wet method without using amide solvents that may cause adverse effects on environments and the like. The porous material has very high moisture permeability that is equivalent to that of a porous material obtained by a dry method and hence can be used in various applications such as intermediate layers and surface layers of, for example, leather-like sheets such as synthetic leather sheets and artificial leather sheets used for clothing, vehicle seats, furniture seats, shoes, bags, and the like; medical care materials such as surgical gowns and bed sheets; building sheets such as windbreak and waterproof sheets and condensation prevention sheets; wrapping materials for drying agents, dehumidification agents, aromatic agents, and the like; agricultural sheets; various separators; and gaskets.

### Brief Description of Drawings

[Fig. 1] Fig. 1 is a photograph of a section of a porous material obtained in Example 5, the photograph being taken with a scanning electron microscope (SEM).
[Fig. 2] Fig. 2 is a photograph of the surface of a porous material obtained in Example 5, the photograph being taken with a SEM.
[Fig. 3] Fig. 3 is a photograph of a section of a porous material obtained in Comparative example 2, the photograph being taken with a SEM.
[Fig. 4] Fig. 4 is a photograph of the surface of a porous material obtained in Comparative example 2, the photograph being taken with a SEM.

### Description of Embodiments

A method for producing a porous material according to the present invention includes coating or impregnating the surface of a base material with a urethane resin composition containing a urethane resin (A) including a polyoxyethylene moiety, an organic solvent (B) that is one or more selected from the group consisting of a ketone solvent and an ester solvent, and optionally another additive; and subsequently bringing the coated surface or the impregnated surface into contact with water or water vapor to cure the urethane resin (A).

In the present invention, the urethane resin (A) including a polyoxyethylene moiety is used as an essential component and the urethane resin (A) is combined with the organic solvent (B) that is one or more selected from the group consisting of a ketone solvent and an ester solvent. As a result, a porous material having high moisture permeability can be produced by a wet method without substantially using conventional amide solvents such as dimethylformamide.

Herein, when a urethane resin without a polyoxyethylene moiety is used instead of the urethane resin (A), specifically, for example, when a urethane resin including a polypropylene moiety is used, there are cases where continuous pores are less likely to be formed and a porous material having sufficiently high moisture permeability cannot be obtained. A method in which dimethylformamide is used instead of the organic solvent (B) is not preferable for reducing environmental load; and, in addition, skinning and generation of aggregate tend to occur in the surface of the porous material and continuous pores are less likely to be uniformly formed and hence there are cases where very high moisture permeability cannot be provided.

Although any urethane resin intramolecularly including a polyoxyethylene moiety can be used as the urethane resin (A) used in the method for producing a porous material, the urethane resin (A) including a polyoxyethylene moiety at a molecular end is preferably used because a large number of pores having a relatively uniform size can be formed and, as a result, a porous material that is excellent in moisture permeability and flexibility can be formed.

The urethane resin (A) preferably includes 1 to 60 mass% of the polyoxyethylene moiety with respect to the total mass of the urethane resin (A) for the purpose of forming pores having a relatively uniform size and providing a porous material that has high moisture permeability.

When, as a urethane resin forming the porous material, the urethane resin (A) is used alone or as a main component, the urethane resin (A) preferably includes 1 to 15 mass%, more preferably 2 to 10 mass%, of the polyoxyethylene moiety with respect to the total amount of the urethane resin (A)

When the urethane resin (A) and a urethane resin (C) without a polyoxyethylene moiety are used in combination as the urethane resin forming the porous material, the urethane resin (A) preferably includes 30 to 60 mass% of the polyoxyethylene moiety with respect to the total amount of the urethane resin (A).

The polyoxyethylene moiety is preferably a moiety represented by, for example, the following general formula (1); in the general formula (1), n preferably represents an integer of 1 to 100, particularly preferably an integer of 10 to 50.

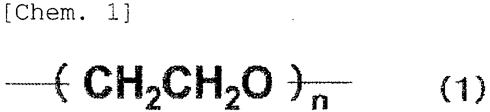

The polyoxyethylene moiety may be a moiety in which a cyclic ether compound such as propylene oxide or tetrahydrofuran has reacted with a portion of a moiety represented by the general formula (1).

The urethane resin (A) preferably has a weight-average molecular weight of 5,000 to 500,000. In particular, when, as a urethane resin forming the porous material, the urethane resin (A) is used alone or as a main component, the urethane resin (A) preferably has a relatively high weight-average molecular weight of 50,000 to 500,000, more preferably 100,000 to 300,000, for the purpose of forming relatively uniform continuous pores and providing a porous material that has high moisture permeability and high strength.

When the urethane resin (A) and the urethane resin (C) without a polyoxyethylene moiety are used in combination as the urethane resin forming the porous material, the urethane resin (A) preferably has a weight-average molecular weight of 5,000 to 20,000, more preferably 5,000 to 15,000, for the purpose of forming relatively uniform continuous pores and providing a porous material that has high moisture permeability and high strength. In this case, the urethane resin (C) preferably has a weight-average molecular weight of 50,000 to 500,000.

The urethane resin (A) including a polyoxyethylene moiety may be a urethane resin obtained by allowing a polyol (a1) to react with a polyisocyanate (a2).

Specifically, the polyol (a1) may contain a polyol (a1-1) including a polyoxyethylene moiety and a product obtained by allowing the polyol (a1) to react with the polyisocyanate (a2) can be used. The urethane resin (A) is preferably a urethane resin that includes a polyoxyethylene moiety at a molecular end and is produced by allowing the polyol (a1) to react with the polyisocyanate (a2) to produce a urethane resin (A') including an isocyanate group at a molecular end and by allowing the urethane resin (A') to react with a polyoxyethylene alcohol (a3). When the polyoxyethylene alcohol (a3) is used, the polyol (a1) may be a polyol without containing the polyol (a1-1) including a polyoxyethylene moiety.

The polyol (a1-1) that can be used for the production of the urethane resin (A) and includes a polyoxyethylene moiety may be, for example, a block copolymer or a random copolymer of polyethylene glycol, polyoxyethylene, and another polyoxyalkylene.

Specifically, a usable polymer is obtained by, for example, addition polymerization of an alkylene oxide such as ethylene oxide, propylene oxide, butylene oxide, styrene oxide, epichlorohydrin, or tetrahydrofuran, with an initiator such as ethylene glycol, diethylene glycol, or triethylene glycol.

When the initiator is propylene glycol, trimethylene glycol, 1,3-butanediol, 1,4-butanediol, 1,6-hexanediol, neopentyl glycol, glycerol, diglycerol, trimethylolethane, trimethylolpropane, water, hexanetriol, or the like, the alkylene oxide may be ethylene oxide and the resultant polymer can be used.

The polyol (a1-1) including a polyoxyethylene moiety preferably has a weight-average molecular weight of 500 to 5,000 in view of forming relatively uniform continuous pores and providing a porous material that has high moisture permeability.

As the polyol (a1) the polyol (a1-1) including a polyoxyethylene moiety may be combined with another polyol.

Examples of the other polyol include a polyether polyol, a polyester polyol, and a polycarbonate polyol. In particular, in view of providing high moisture permeability, the polyol is preferably one or more selected from the group consisting of a polyether polyol and a polyester polyol.

A polyether polyol that can be used as the other polyol may be, for example, a polyether polyol obtained by addition polymerization of an alkylene oxide with, as an initiator, one or more compounds having two or more active hydrogen atoms.

Examples of the initiator include propylene glycol, trimethylene glycol, 1,3-butanediol, 1,4-butanediol, 1,6-hexanediol, neopentyl glycol, glycerol, diglycerol, trimethylolethane, trimethylolpropane, water, and hexanetriol.

Examples of the alkylene oxide include propylene oxide, butylene oxide, styrene oxide, epichlorohydrin, and tetrahydrofuran.

As the polyether polyol that can be used as the other polyol, polypropylene glycol or polyoxytetramethylene glycol is preferably used in combination.

Examples of the polyester polyol that can be used as the other polyol include an aliphatic polyester polyol and an aromatic polyester polyol obtained through an esterification reaction between a polyol having a low molecular weight and a polycarboxylic acid, a polyester obtained through a ring-opening polymerization reaction of a. cyclic ester compound such as ε-caproiactone, and a copolymerization polyester of the foregoing.

Examples of the polyol having a low molecular weight include ethylene glycol and propylene glycol.

Examples of the polycarboxylic acid include succinic acid, adipic acid, sebacic acid, dodecane dicarboxylic acid, terephthalic acid, isophthalic acid, phthalic acid, anhydrides of the foregoing, and ester-forming derivatives of the foregoing.

Examples of the cyclic ester compound include ε-caprolactone and γ-butyrolactone.

Examples of the polycarbonate polyol that can be used as the other polyol include a polycarbonate polyol obtained through a reaction between a carbonate and a polyol and a polycarbonate polyol obtained through a reaction between phosgene and bisphenol A or the like.

Examples of the carbonate include methyl carbonate, dimethyl carbonate, ethyl carbonate, diethyl carbonate, cyclocarbonate, and diphenyl carbonate.

Examples of the polyol that can react with a carbonate include dihydroxy compounds having a relatively low molecular weight such as ethylene glycol, diethylene glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 3-methyl-1,5-pentanediol, 2-ethyl-1,3-hexanediol, 2-methyl-1,3-propanediol, 2-methyl-1,8-octanediol, 2-butyl-2-ethylpropanediol, 2-methyl-1,8-octanediol, neopentyl glycol, 1,4-cyclohexanediol, 1,4-cyclohexanedimethanol, hydroquinone, resorcin, bisphenol-A, bisphenol-F, and 4,4'-biphenol; polyether polyols such as polyethylene glycol, polypropylene glycol, and polyoxytetramethylene glycol; and polyester polyols such as polyhexamethylene adipate, polyhexamethylene succinate, and polycaprolactone.

When the other polyol is used, the polyol (a1-1) including a polyoxyethylene moiety is preferably used in the range of 0.1 to 20 mass% with respect to the total amount of the polyol (a1) for the purpose of forming relatively uniform continuous pores and providing a porous material that has high moisture permeability.

In addition to the above-described polyols, if necessary, as the polyol (a1), for example, acrylic polyol, polybutadiene polyol, hydrogenated polybutadiene polyol, or a partially saponified ethylene-vinyl acetate copolymer can be used unless advantages provided by the present invention are degraded.

Examples of the polyisocyanate (a2) that can react with the polyol (a1) include aromatic polyisocyanates such as phenylene diisocyanate, tolylene diisocyanate, 4,4'-diphenylmethane diisocyanate, naphthalene diisocyanate, polymethylene polyphenyl polyisocyanate, and carbodiimidized diphenylmethane polyisocyanate; and aliphatic or alicyclic moiety-containing polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate. These examples may be used alone or in combination of two or more thereof. In particular, use of such an aromatic polyisocyanate is preferable for obtaining a urethane resin (A) that can be readily cured by a wet method. More preferably, 4,4'-diphenylmethane diisocyanate is used.

Examples of the polyoxyethylene alcohol (a3) that can be used for the production of the urethane resin (A) include a block copolymer and a random copolymer of polyethylene glycol, polyoxyethylene, and another polyoxyalkylene. A polyoxyethylene alcohol in which a hydroxy group of one end is capped may be suitably used.

The polyoxyethylene alcohol (a3) preferably has a weight-average molecular weight of 1,000 to 5,000.

In the production of the urethane resin (A), if necessary, a chain extender may be used. In particular, when, as a urethane resin forming the porous material, the urethane resin (A) is used alone or as a main component, a urethane resin having a relatively high molecular weight of 50,000 to 500,000 is preferably used. Accordingly, in such a case, a chain extender is preferably used in combination with the urethane resin (A).

Examples of the chain extender include polyhydric alcohols such as ethylene glycol, 1,2-propanediol, 1,3-butanediol, 1,4-butanediol, 2,3-butanediol, 3-methyl-1,5-pentanediol, 1,6-hexanediol, 3,3'-dimethylolheptane, 1,4-cyclohexanedimethanol, neopentyl glycol, 3,3-bis(hydroxymethyl)heptane, diethylene glycol, dipropylene glycol, polyoxypropylene glycol, polyoxybutylene glycol, glycerol, trimethylol propane, sorbitol, and hydroquinone diethylol ether; amine compounds; amino acids; alkanolamines; and modified silicone compounds. Ethylene glycol is preferably used.

The urethane resin (A) can be produced by, for example, in the absence of solvents or in the presence of the organic solvent (B) described below, mixing the polyol (a1) containing the polyol (a1-1) including a polyoxyethylene moiety and the polyisocyanate (a2) to allow a reaction to occur.

Alternatively, the urethane resin (A) can be produced by a method in which, for example, in the absence of solvents or in the presence of the organic solvent (B) described below, the polyol (a1), the polyisocyanate (a2), and the polyoxyethylene alcohol (a3) are mixed to allow a reaction to occur; or by a method in which, for example, in the absence of solvents or in the presence of the organic solvent (B) described below, the polyol (a1) and the polyisocyanate (a2) are mixed to allow a reaction to occur to thereby produce a urethane resin (A') including an isocyanate group at a molecular end, and the urethane resin (A') and the polyoxyethylene alcohol (a3) are mixed to allow a reaction between the isocyanate group of the urethane resin (A') and the hydroxy group of the polyoxyethylene alcohol (a3) to occur.

When the chain extender is used in the production of the urethane resin (A), the chain extender may be used to react in the mixing of the polyol (a1) and the polyisocyanate (a2); or, after the polyol (a1) is allowed to react with the polyisocyanate (a2) to produce the urethane resin (A') including an isocyanate group at a molecular end, the urethane resin (A') may be mixed with the chain extender to allow a reaction to occur.

In the reaction between the polyol (a1) and the polyisocyanate (a2), an equivalent ratio [isocyanate group/hydroxy group] of the isocyanate groups of the polyisocyanate (a2) to the hydroxy groups of the polyol is preferably in the range of 0.8 to 1.1, more preferably 0.9 to 1.0 because, in a porous material, the size of pores becomes relatively uniform and high moisture permeability and highly flexible texture can be achieved. When the chain extender is used, the reaction is preferably performed with the equivalent ratio in the range of 1.0 to 1.1 so that the urethane resin (A') includes an isocyanate group at a molecular end. When the polyoxyethylene alcohol (a3) is used to introduce the polyoxyethylene moiety into a molecular end of the urethane resin, the reaction is preferably performed with the equivalent ratio in the range of 1.0 to 1.1 so that the urethane resin (A') includes an isocyanate group at a molecular end.

The urethane resin (A) obtained in the above-described manner is preferably dissolved or dispersed in the organic solvent (B) and a portion of the urethane resin (A) is preferably dissolved in the organic solvent (B) . In view of suppressing curing of the urethane resin (A) in the organic solvent (B) to keep high storage stability for a long period of time, the urethane resin (A) is more preferably dissolved or dispersed in a solvent mixture of the organic solvent (B) and water, that is, in the form of a mixture. Specifically, it is preferred that the reaction between the polyol (a1) and the polyisocyanate (a2) be performed in the presence of the organic solvent (B) to provide a mixture of the urethane resin (A) and the organic solvent (B) and the mixture be subsequently mixed with water.

The solvent mixture preferably contains water in the range of 1 to 30 mass%, more preferably in the range of 1 to 10 mass%, with respect to the total amount of the solvent mixture for the purpose of keeping high storage stability.

In the present invention, combined use of the urethane resin (A) and the urethane resin (C) in the production of a porous material is preferred for the purpose of forming relatively uniform continuous pores and providing a porous material that has high moisture permeability.

As the urethane resin (C) that can be combined with the urethane resin (A), a urethane resin without a polyoxyethylene moiety can be used.

As the urethane resin (C) without a polyoxyethylene group, a urethane resin can be used that is obtained by a reaction of, among the polyol (a1) exemplified as being usable for the production of the urethane resin (A), the other polyol other than the polyol (a1-1) including a polyoxyethylene moiety, the polyisocyanate (a2), and, if necessary, the chain extender.

As a polyol (a4) that can be used for the production of the urethane resin (C), among the polyol (a1) exemplified as being usable for the production of the urethane resin (A), the other polyol other than the polyol (a1-1) including a polyoxyethylene moiety can be used: specifically, a polyether polyol, a polyester polyol, or a polycarbonate polyol each of which does not include a polyoxyethylene moiety can be used.

In particular, combined use of a polyether polyol and a polyester polyol that do not include a polyoxyethylene moiety and combined use of the polyester polyol and the polycarbonate polyol are preferred for the purpose of suppressing the occurrence of skinning and the like and providing a porous material having high moisture permeability.

Examples of a polyether polyol that can be used as the polyol (a4) include polyether polyols obtained by addition polymerization of an alkylene oxide other than ethylene oxide with an initiator such as propylene glycol, trimethylene glycol, 1,3-butanediol, 1,4-butanediol, 1,6-hexanediol, neopentyl glycol, glycerol, trimethylolethane, or trimethylolpropane.

Examples of the alkylene oxide include propylene oxide, butylene oxide, styrene oxide, epichlorohydrin, and tetrahydrofuran.

In particular, the polyether polyol is preferably polyoxytetramethylene glycol, polypropylene glycol, or the like.

As the polyester polyol and the polycarbonate polyol that can be used as the polyol (a4), those exemplified as being usable as the polyol (a1) can be similarly used.

The urethane resin (C) can be produced by, for example, in the absence of solvents or in the presence of the organic solvent (B) described below, mixing the polyol (a4) and the polyisocyanate (a2) to allow a reaction to occur.

In the reaction between the polyol (a4) and the polyisocyanate (a2), an equivalent ratio [isocyanate group/hydroxy group] of the isocyanate groups of the polyisocyanate (a2) to the hydroxy groups of the polyol (a4) is preferably in the range of 0.8 to 1.1, more preferably 0.9 to 1.0 because, in a porous material, the size of pores becomes relatively uniform and high moisture permeability and highly flexible texture can be achieved.

The urethane resin (C) obtained in the above-described manner is preferably dissolved or dispersed in the organic solvent (B) . In view of suppressing curing of the urethane resin (C) to keep high storage stability, the urethane resin (C) is preferably dissolved or dispersed in a solvent mixture of the organic solvent (B) and water, that is, in the form of a mixture. Specifically, it is preferred that the reaction between the polyol (a4) and the polyisocyanate (a2) be performed in the presence of the organic solvent (B) to provide a mixture of the urethane resin (C) and the organic solvent (B) and the mixture be subsequently mixed with water.

The solvent mixture preferably contains water in the range of 1 to 30 mass%, more preferably in the range of 1 to 10 mass%, with respect to the total amount of the solvent mixture for the purpose of keeping high storage stability.

When the urethane resin (C) is combined with the urethane resin (A), the mass ratio [(A)/(C)] of the resins is preferably in the range of 0.1/100 to 10/100 for the purpose of not causing skinning, forming relatively uniform continuous pores, and providing a porous material that has high moisture permeability.

Next, the organic solvent (B) used in the present invention will be described.

In the present invention, as an organic solvent used in the production of a porous material by a wet method with the urethane resin (A) and the like, it is important that one or more selected from the group consisting of a ketone solvent and an ester solvent are used. As described above, dimethylformamide (DMF) has been conventionally used as an organic solvent in the production of a porous material by a wet method; and, in view of reduction of environmental load and the like, the development of a method for forming a porous material by a wet method without using dimethylformamide has been demanded.

It is considered to be difficult to produce, by a wet method, a porous material having moisture permeability that is equivalent to that of a porous material obtained by the conventional dry method. The development of a method for producing a porous material having very high moisture permeability by a wet method has also been demanded.

Under such circumstances, it has been found that, by using the urethane resin (A) including a polyoxyethylene moiety as an essential component and by selecting one or more from the group consisting of a ketone solvent and an ester solvent instead of the conventional dimethylformamide, a porous material having very high moisture permeability can be produced even by a wet method. This is the present invention.

When the conventional dimethylformamide is used instead of the organic solvent (B), even when the urethane resin (A) is used, there are cases where skinning is caused in the surface of a porous material or relatively uniform continuous pores cannot be formed.

Examples of the ketone solvent that can be used as the organic solvent (B) include methyl ethyl ketone, methyl n-propyl ketone, acetone, and methyl isobutyl ketone.

Examples of the ester solvent that can be used as the organic solvent (B) include methyl formate, ethyl formate, propyl formate, methyl acetate, ethyl acetate, isopropyl acetate, isobutyl acetate, isobutyl acetate, and sec-butyl acetate.

In particular, the organic solvent (B) is preferably methyl ethyl ketone or ethyl acetate for the purpose of suppressing occurrence of skinning and generation of aggregate, forming relatively uniform continuous pores, and providing a porous material that has high moisture permeability.

The organic solvent (B) preferably has a boiling point of 150°C: or less and can preferably dissolve 50 g or less of water therein at 25°C, more preferably 1 to 50 g of water therein at 25°C.

As for the organic solvent, the present invention does not exclude combined use of the organic solvent (B) and another organic solvent. However, the content of the organic solvent (B) with respect to the total amount of the organic solvent used in the present invention is preferably in the range of 95 to 100 mass%, more preferably in the range of 98 to 100 mass%, more preferably in the range of 99 to 100 mass%; in particular, the organic solvent (B) alone is preferably used.

Examples of the other organic solvent include a solvent mixture between an organic solvent that can dissolve a relatively large amount of water therein such as tetrahydrofuran (THF) or dioxane and an organic solvent that can dissolve a relatively small amount of water therein such as benzene, toluene, n-hexane, or 1,2-dichloroethane.

When the organic solvent (B) is combined with the other organic solvent, the solvent mixture preferably has a boiling point of 150°C or less and can preferably dissolve 50 g or less of water therein at 25°C, more preferably 1 to 50 g of water therein at 25°C.

As described above, in the present invention, the organic solvent (B) may be combined with another organic solvent. Examples of the other organic solvent include tetrahydrofuran and dioxane.

The content of the organic solvent (B) with respect to the total amount of the urethane resin (A) and the urethane resin (C) used in the present invention is preferably in the range of 50 to 80 mass%, more preferably in the range of 60 to 80 mass%.

A urethane resin composition used in the present invention can be produced by, for example, mixing the urethane resin (A) produced in the absence of solvents, with the organic solvent (B). Alternatively, by allowing the polyol (a1) to react with the polyisocyanate (a2) and the like in the presence of the organic solvent (B), a urethane resin composition may be produced that is a mixture of the urethane resin (A) and the organic solvent (B) .

When the urethane resin (C) is used in combination, a urethane resin composition can be produced by mixing the urethane resin (A) and the urethane resin (C) that are separately produced with the organic solvent (B). When the urethane resin (C) is produced in the presence of the organic solvent (B), a urethane resin composition can also be produced by mixing a mixture of the urethane resin (A) and the organic solvent (B) with a mixture of the urethane resin (C) and the organic solvent (B).

In view of keeping high storage stability of the urethane resin composition, the urethane resin composition preferably contains water.

The content of the water with respect to the total amount of the organic solvent (B) and the water that are contained in the urethane resin composition is preferably in the range of 1 to 30 mass%, more preferably in the range of 1 to 10 mass%.

If necessary, the urethane resin composition may contain, in addition to the above-described components, another additive.

As for such an additive, for example, the urethane resin composition may be colored with an organic pigment or an inorganic pigment; and, if necessary, normally used additives such as a bromine-based flame retardant, a chlorine-based flame retardant, a plasticizer, a softening agent, a stabilizer, a wax, a defoaming agent, a dispersing agent, a penetrant, a surfactant, various fillers, a fungicide, an antimicrobial agent, an ultraviolet absorbing agent, an antioxidant, a weathering stabilizer, a fluorescent brightening agent, an anti-aging agent, and a thickener can be further used unless advantages provided by the present invention are inhibited.

A method for producing a porous material by a wet method with a urethane resin composition obtained in the above-described manner is, for example, a production method including coating or impregnating the surface of a base material with the urethane resin composition; subsequently bringing the coated surface into contact with water or water vapor to cure the urethane resin (A) and the urethane resin (C) contained in the urethane resin composition by a wet method to form a porous material; and, if necessary, subsequently cleaning the surface of the porous material with water or hot water and drying the porous material.

The base material subjected to coating or the like with the urethane resin composition may be a base material constituted by nonwoven fabric, woven fabric, or knitted fabric; a resin film; or the like. Examples of the constituent of the base material include polyester fibers, nylon fibers, acrylic fibers, polyurethane fibers, acetate fibers, rayon fibers, polylactide fibers, cotton, hemp, silk, wool, and blended fibers of the foregoing.

If necessary, the surface of the base material may be subjected to an anti-static treatment, a mold-release treatment, a water-repellent treatment, a water-absorption treatment, an antimicrobial and deodorization treatment, an antimicrobial treatment, an ultraviolet-shielding treatment, or the like.

The process of coating or impregnating the surface of the base material with the urethane resin composition may be performed by, for example, a gravure coater method, a knife coater method, a pipe coater method, or a comma coater method. At this time, in view of adjusting the viscosity of the urethane resin composition to enhance coating processability and the like, if necessary, the organic solvent (B), water, or the like may be used.

Immediately before the surface of the base material is coated or impregnated with the urethane resin composition, 10 to 100 parts by mass of the organic solvent (B) is preferably supplied with respect to 100 parts by mass of the urethane resin composition and further 10 to 100 parts by mass of water is preferably supplied with respect to 100 parts by mass of the urethane resin composition for the purpose of efficiently forming a large number of relatively uniform pores; more preferably, 30 to 80 parts by mass of water is used.

The thickness of a coated film formed of the urethane resin composition by coating or impregnation in the above-described manner is preferably about 0.5 to 5.0 mm, more preferably about 0.5 to 3 mm.

The process of bringing the coated surface formed by coating or impregnation with the urethane resin composition, into contact with water or water vapor is performed by, for example, a method of immersing a base material having a coated layer or an impregnated layer formed of the urethane resin composition, into a water bath; or a method of spraying water vapor onto the coated surface with a spray. The immersion is preferably performed in a hot water bath at about 25°C to 60°C for about 10 to 60 minutes. The spraying of water vapor is preferably performed by spraying hot water adjusted to have a temperature of about 25°C to 60°C for about 10 to 60 minutes.

If necessary, a porous material formed in the above-described manner is preferably subjected to cleaning of the surface of the porous material with water at room temperature or hot water at about 30°C to 60°C and subsequently dried. The drying is preferably performed with a dryer or the like adjusted to have a temperature of about 80°C to 120°C for about 10 to 30 minutes.

A porous material obtained in the above-described manner has a porous structure including continuous pores that are uniform and fine. Although the size of the pores can be appropriately adjusted in accordance with an application or the like, the pores preferably have a diameter of about 1 to 10 µm in view of achieving high moisture permeability, highly flexible texture, high strength, and the like. A porous material obtained by the present invention includes continuous pores constituted by such pores that are joined together and hence it has considerably high moisture permeability, compared with porous materials obtained by the conventional wet method; and it has high moisture permeability equivalent to that of porous materials obtained by the conventional dry method.

The thickness of the porous material can be appropriately adjusted in accordance with an application or the like by, for example, adjusting the compositions of the urethane resin (A) and the urethane resin (C). In view of achieving high moisture permeability and highly flexible texture, the porous material is preferably in the form of a porous membrane or a porous film having a thickness of 10 to 500 µm.

When the moisture permeability of a porous material obtained in the above-described manner is measured by a testing method for water vapour permeability based on A-1 method (calcium chloride method) in Japanese Industrial Standard JIS L1099-1993, it is preferably in the range of 4,000 to 20,000 g/m²·24hrs, more preferably in the range of 5,000 to 20,000 g/m²·24hrs.

As described above, a porous material obtained by a production method according to the present invention has high moisture permeability, high air permeability, and highly flexible texture. Therefore, the porous material can be used in various applications such as intermediate layers and surface layers of, for example, leather-like sheets such as synthetic leather sheets and artificial leather sheets used for clothing, vehicle seats, furniture seats, shoes, bags, and the like; medical care materials such as surgical gowns and bed sheets; building sheets such as windbreak and waterproof sheets and condensation prevention sheets; wrapping materials for drying agents, dehumidification agents, aromatic agents, and the like; agricultural sheets; various separators; and gaskets.

### EXAMPLES

Hereinafter, the present invention will be more specifically described with reference to Examples.

### [EXAMPLE 1]

### (Preparation of urethane resin composition (I))

In a reaction apparatus equipped with a stirrer and a thermometer, 103 parts by mass of polyoxytetramethylene glycol (weight molecular weight: 1800), 70 parts by mass of polybutylene adipate (weight molecular weight: 2000), 3 parts by mass of polyethylene glycol (weight-average molecular weight: 1540), and 103 parts by mass of 4,4'-diphenylmethane diisocyanate were allowed to react in 128 parts by mass of methyl ethyl ketone under stirring at 60°C for 2 hours to provide a mixture of a polyurethane (A'-1) including an isocyanate group at a molecular end and methyl ethyl ketone.

Subsequently, 126 parts by mass of methyl ethyl ketone and 21 parts by mass of ethylene glycol serving as a chain extender were added to the mixture under stirring and the resultant mixture was allowed to react at 60°C for 4 hours. After the ethylene glycol was added, 416 parts by mass of methyl ethyl ketone was gradually added with an increase in the viscosity of the mixture; the reaction was allowed to continue while the viscosity of the mixture was adjusted; after the reaction was completed, 30 parts by mass of water was supplied to the mixture to thereby provide a urethane resin composition (I) (non-volatile content: 30 mass%, viscosity: 15,000 mPa·s) containing a urethane resin (A-1) having a polyoxyethylene moiety and a weight-average molecular weight of 120,000, methyl ethyl ketone, and water. Even when the urethane resin composition (I) was left in an environment at 25°C for 2 months, it did not substantially thicken and had high storage stability.

### (Formation of porous material and leather-like sheet)

A surface of a nonwoven fabric constituted by polyester fibers was coated with the urethane resin composition (I) with a comma coater such that the coated film had a thickness of about 1.2 mm. The coated object was subsequently immersed in water adjusted to be at 25°C for 10 minutes so that the urethane resin (A-1) in the urethane resin composition (I) was wet-cured.

The surfaces of the coated object were subsequently cleaned by immersing the coated object in hot water adjusted to be at 50°C for 30 minutes, and then dried with a hot-air dryer adjusted to be at 100°C for 20 minutes. As a result, a porous material (I-1) in which continuous pores that were uniform and fine were formed and a leather-like sheet (I-2) in which the porous material (I-1) was laminated to a surface of the nonwoven fabric were obtained.

### [EXAMPLE 2]

### (Preparation of urethane resin composition (II))

In a reaction apparatus equipped with a stirrer and a thermometer, 103 parts by mass of polyoxytetramethylene glycol (weight molecular weight: 1800), 70 parts by mass of polybutylene adipate (weight molecular weight: 2000), 3 parts by mass of polyethylene glycol (weight-average molecular weight: 1540), and 103 parts by mass of 4,4'-diphenylmethane diisocyanate were allowed to react in 128 parts by mass of acetone under stirring at 60°C for 2 hours to provide a mixture of a polyurethane (A'-2) including an isocyanate group at a molecular end and acetone.

Subsequently, 126 parts by mass of acetone and 21 parts by mass of ethylene glycol serving as a chain extender were added to the mixture under stirring and the resultant mixture was allowed to react at 60°C for 4 hours. After the ethylene glycol was added, 416 parts by mass of acetone was gradually added with an increase in the viscosity of the mixture; the reaction was allowed to continue while the viscosity of the mixture was adjusted; after the reaction was completed, 30 parts by mass of water was supplied to the mixture to thereby provide a urethane resin composition (II) (non-volatile content: 30 mass%, viscosity: 15,000 mPa·s) containing a urethane resin (A-2) having a polyoxyethylene moiety and a weight-average molecular weight of 120,000, acetone, and water.

### (Formation of porous material and leather-like sheet)

A porous material (II-1) and a leather-like sheet (II-2) were formed in the same manner as in the (Formation of porous material and leather-like sheet) in Example 1 above except that the urethane resin composition (II) was used instead of the urethane resin composition (I).

### [EXAMPLE 3]

### (Preparation of urethane resin composition (III))

In a reaction apparatus equipped with a stirrer and a thermometer, 103 parts by mass of polyoxytetramethylene glycol (weight molecular weight: 1800), 70 parts by mass of polybutylene adipate (weight molecular weight: 2000), 3 parts by mass of polyethylene alcohol having a single hydroxy group in one end (M-2000, manufactured by NOF CORPORATION, weight-average molecular weight : 2000), and 103 parts by mass of 4,4'-diphenylmethane diisocyanate were allowed to react in 128 parts by mass of methyl ethyl ketone under stirring at 60°C for 2 hours to provide a mixture of a polyurethane (A'-3) including an isocyanate group at a molecular end and methyl ethyl ketone.

Subsequently, 126 parts by mass of methyl ethyl ketone and 21 parts by mass of ethylene glycol serving as a chain extender were added to the mixture under stirring and the resultant mixture was allowed to react at 60°C for 4 hours. After the ethylene glycol was added, 416 parts by mass of methyl ethyl ketone was gradually added with an increase in the viscosity of the mixture; the reaction was allowed to continue while the viscosity of the mixture was adjusted; after the reaction was completed, 30 parts by mass of water was supplied to the mixture to thereby provide a urethane resin composition (III) (non-volatile content: 30 mass%, viscosity: 15,000 mPa·s) containing a urethane resin (A-3) having a polyoxyethylene moiety and a weight-average molecular weight of 120,000, methyl ethyl ketone, and water.

### (Formation of porous material and leather-like sheet)

A porous material (III-1) and a leather-like sheet (III-2) were formed in the same manner as in the (Formation of porous material and leather-like sheet) in Example 1 above except that the urethane resin composition (III) was used instead of the urethane resin composition (I).

### [EXAMPLE 4]

### (Preparation of urethane resin composition (IV))

In a reaction apparatus equipped with a stirrer and a thermometer, 103 parts by mass of polyoxytetramethylene glycol (weight molecular weight: 1800), 70 parts by mass of polybutylene adipate (weight molecular weight: 2000), 3 parts by mass of polyethylene alcohol having a single hydroxy group in one end (M-2000, manufactured by NOF CORPORATION, weight-average molecular weight: 2000), and 103 parts by mass of 4,4'-diphenylmethane diisocyanate were allowed to react in 128 parts by mass of acetone under stirring at 60°C for 2 hours to provide a mixture of a polyurethane (A'-4) including an isocyanate group at a molecular end and acetone.

Subsequently, 126 parts by mass of acetone and 21 parts by mass of ethylene glycol serving as a chain extender were added to the mixture under stirring and the resultant mixture was allowed to react at 60°C for 4 hours. After the ethylene glycol was added, 416 parts by mass of acetone was gradually added with an increase in the viscosity of the mixture; the reaction was allowed to continue while the viscosity of the mixture was adjusted; after the reaction was completed, 30 parts by mass of water was supplied to the mixture to thereby provide a urethane resin composition (IV) (non-volatile content: 30 mass%, viscosity: 15,000 mPa·s) containing a urethane resin (A-4) having a polyoxyethylene moiety and a weight-average molecular weight of 120,000, acetone, and water.

### (Formation of porous material and leather-like sheet)

A porous material (IV-1) and a leather-like sheet (IV-2) were formed in the same manner as in the (Formation of porous material and leather-like sheet) in Example 1 above except that the urethane resin composition (IV) was used instead of the urethane resin composition (I).

### [EXAMPLE 5]

### (Preparation of urethane resin composition (V))

In a reaction apparatus equipped with a stirrer and a thermometer, 214 parts by mass of polypropylene glycol (weight molecular weight: 2000) and 39 parts by mass of 4,4'-diphenylmethane diisocyanate were allowed to react in 330 parts by mass of methyl ethyl ketone under stirring at 80°C for 2 hours to provide a mixture of a polyurethane (A'-5) including an isocyanate group at a molecular end and methyl ethyl ketone.

Subsequently, 147 parts by mass of polyethylene glycol (weight molecular weight: 1540) was supplied to the mixture of the polyurethane (A'-5) and methyl ethyl ketone and the resultant mixture was allowed to react at 70°C for 6 hours. After the reaction was completed, 159 parts by mass of methyl ethyl ketone was supplied to the mixture to thereby provide a mixture (non-volatile content: about 45 mass%) containing a urethane resin (A-5) having a weight-average molecular weight of 7,500 and methyl ethyl ketone.

In a reaction apparatus equipped with a stirrer and a thermometer, 106 parts by mass of polyoxytetramethylene glycol (weight molecular weight: 1800), 70 parts by mass of polybutylene adipate (weight molecular weight: 2000), and 103 parts by mass of 4,4'-diphenylmethane diisocyanate were allowed to react in 128 parts by mass of methyl ethyl ketone under stirring at 60°C for 2 hours to provide a mixture of a polyurethane (C'-1) including an isocyanate group at a molecular end and methyl ethyl ketone.

Subsequently, 126 parts by mass of methyl ethyl ketone and 21 parts by mass of ethylene glycol serving as a chain extender were added to the mixture under stirring and the resultant mixture was allowed to react at 60°C for 4 hours. After the ethylene glycol was added, 416 parts by mass of methyl ethyl ketone was gradually added with an increase in the viscosity of the mixture; the reaction was allowed to continue while the viscosity of the mixture was adjusted; after the reaction was completed, 30 parts by mass of water was supplied to the mixture to thereby provide a mixture (non-volatile content: 30 mass%) containing a urethane resin (C-1) having a weight-average molecular weight of 120,000 without a polyoxyethylene moiety, methyl ethyl ketone, and water.

Subsequently, 25 parts by mass of the mixture containing the urethane resin (A-5) and methyl ethyl ketone was supplied to 975 parts by mass of the obtained mixture of the urethane resin (C-1), methyl ethyl ketone, and water; and the resultant mixture was stirred to thereby provide a urethane resin composition (V) (non-volatile content: about 30 mass%, viscosity: 15,000 mPa·s, mass ratio [A-5/C-1] of the urethane resin (A-5) to the urethane resin (C-1) = 1/26) containing the urethane resin (A-5) having a weight-average molecular weight of 7,500, the urethane resin (C-1) having a weight-average molecular weight of 120,000, methyl ethyl ketone, and water.

### (Formation of porous material and leather-like sheet)

A porous material (V-1) and a leather-like sheet (V-2) were formed in the same manner as in the (Formation of porous material and leather-like sheet) in Example 1 above except that the urethane resin composition (V) was used instead of the urethane resin composition (I).

### [EXAMPLE 6]

### (Preparation of urethane resin composition (VI))

In a reaction apparatus equipped with a stirrer and a thermometer, 214 parts by mass of polypropylene glycol (weight molecular weight: 2000) and 39 parts by mass of 4,4'-diphenylmethane diisocyanate were allowed to react in 330 parts by mass of acetone under stirring at 80°C for 2 hours to provide a mixture of a polyurethane (A'-6) including an isocyanate group at a molecular end and acetone.

Subsequently, 147 parts by mass of polyethylene glycol (weight molecular weight: 1540) was supplied to the mixture of the polyurethane (A'-6) and acetone and the resultant mixture was allowed to react at 70°C for 6 hours. After the reaction was completed, 159 parts by mass of acetone was supplied to the mixture to thereby provide a mixture (non-volatile content: about 45 mass%) containing a urethane resin (A-6) having a weight-average molecular weight of 7,500 and acetone.

In a reaction apparatus equipped with a stirrer and a thermometer, 106 parts by mass of polyoxytetramethylene glycol (weight molecular weight: 1800), 70 parts by mass of polybutylene adipate (weight molecular weight: 2000), and 103 parts by mass of 4,4'-diphenylmethane diisocyanate were allowed to react in 128 parts by mass of acetone under stirring at 60°C for 2 hours to provide a mixture of a polyurethane (C'-2) including an isocyanate group at a molecular end and acetone.

Subsequently, 126 parts by mass of acetone and 21 parts by mass of ethylene glycol serving as a chain extender were added to the mixture under stirring and the resultant mixture was allowed to react at 60°C for 4 hours. After the ethylene glycol was added, 416 parts by mass of acetone was gradually added with an increase in the viscosity of the mixture; the reaction was allowed to continue while the viscosity of the mixture was adjusted; after the reaction was completed, 30 parts by mass of water was supplied to the mixture to thereby provide a mixture (non-volatile content: 30 mass%) containing a urethane resin (C-2) having a weight-average molecular weight of 120,000 without a polyoxyethylene moiety, acetone, and water.

Subsequently, 25 parts by mass of the mixture containing the urethane resin (A-6) and acetone was supplied to 975 parts by mass of the obtained mixture of the urethane resin (C-2), acetone, and water; and the resultant mixture was stirred to thereby provide a urethane resin composition (VI) (non-volatile content: about 30 mass%, viscosity**:** 15,000 mPa·s, mass ratio [A-6/C-2] of the urethane resin (A-6) to the urethane resin (C-2) = 1/26) containing the urethane resin (A-6) having a weight-average molecular weight of 7,500, the urethane resin (C-2) having a weight-average molecular weight of 120,000, methyl ethyl ketone, and water.

A porous material (VI-1) and a leather-like sheet (VI-2) were formed in the same manner as in the (Formation of porous material and leather-like sheet) in Example 1 above except that the urethane resin composition (VI) was used instead of the urethane resin composition (I).

### [EXAMPLE 7]

### (Preparation of urethane resin composition (VII))

In a reaction apparatus equipped with a stirrer and a thermometer, 103 parts by mass of polyoxytetramethylene glycol (weight molecular weight: 1800), 70 parts by mass of polybutylene adipate (weight molecular weight: 2000), 3 parts by mass of polyethylene glycol (weight-average molecular weight: 1540), and 103 parts by mass of 4,4'-diphenylmethane diisocyanate were allowed to react in 128 parts by mass of methyl ethyl ketone under stirring at 60°C for 2 hours to provide a mixture of a polyurethane (A'-7) including an isocyanate group at a molecular end and methyl ethyl ketone.

Subsequently, 126 parts by mass of methyl ethyl ketone and 21 parts by mass of ethylene glycol serving as a chain extender were added to the mixture under stirring and the resultant mixture was allowed to react at 60°C for 4 hours. After the ethylene glycol was added, 446 parts by mass of methyl ethyl ketone was gradually added with an increase in the viscosity of the mixture; and the reaction was allowed to continue while the viscosity of the mixture was adjusted to thereby provide a urethane resin composition (VII) (non-volatile content: 30 mass%, viscosity: 15,000 mPa·s) containing a urethane resin (A-7) having a polyoxyethylene moiety and a weight-average molecular weight of 120,000 and methyl ethyl ketone. When the urethane resin composition (VII) was left in an environment at 25°C for 2 months, it thickened and was slightly inferior in terms of storage stability for a long period of time.

### (Formation of porous material and leather-like sheet)

A surface of a nonwoven fabric constituted by polyester fibers was coated with the urethane resin composition (VII) immediately after the preparation thereof with a comma coater such that the coated film had a thickness of about 1.2 mm. The coated object was subsequently immersed in water adjusted to be at 25°C for 10 minutes so that the urethane resin (A-7) in the urethane resin composition (VII) was wet-cured.

The surfaces of the coated object were subsequently cleaned by immersing the coated object in hot water adjusted to be at 50°C for 30 minutes, and then dried with a hot-air dryer adjusted to be at 100°C for 20 minutes. As a result, a porous material (VII-1) in which continuous pores that were uniform and fine were formed and a leather-like sheet (VII-2) in which the porous material (VII-1) was laminated to a surface of the nonwoven fabric were obtained.

### [COMPARATIVE EXAMPLE 1]

### (Preparation of urethane resin composition (VIII))

In a reaction apparatus equipped with a stirrer and a thermometer, 103 parts by mass of polyoxytetramethylene glycol (weight molecular weight: 1800), 70 parts by mass of polybutylene adipate (weight molecular weight: 2000), 3 parts by mass of polyethylene glycol, and 103 parts by mass of 4,4'-diphenylmethane diisocyanate were allowed to react in 128 parts by mass of methyl ethyl ketone under stirring at 60°C for 2 hours to provide a mixture of polyurethane (A'-8) including an isocyanate group at a molecular end and methyl ethyl ketone.

Subsequently, 126 parts by mass of methyl ethyl ketone and 21 parts by mass of ethylene glycol serving as a chain extender were added to the mixture under stirring and the resultant mixture was allowed to react at 60°C for 4 hours. After the ethylene glycol was added, 446 parts by mass of methyl ethyl ketone was gradually added with an increase in the viscosity of the mixture; and the reaction was allowed to continue while the viscosity of the mixture was adjusted to thereby provide a urethane resin composition (VIII) (non-volatile content: 30 mass%, viscosity: 15,000 mPa·s) containing a urethane resin (A-8) having a polyoxyethylene moiety and a weight-average molecular weight of 120,000 and methyl ethyl ketone.

### (Formation of porous material and leather-like sheet)

A surface of a nonwoven fabric constituted by polyester fibers was coated with the urethane resin composition (VIII) with a comma coater such that the coated film had a thickness of about 1.2 mm. The coated object was subsequently dried with a dryer adjusted to be at 70°C for 20 minutes and then dried with a dryer adjusted to be at 120°C for 20 minutes. As a result, a leather-like sheet (VIII-2) in which a porous material (VIII-1) was laminated to a surface of the nonwoven fabric was obtained by such a dry method.

### [COMPARATIVE EXAMPLE 2]

### (Preparation of urethane resin composition (IX))

In a reaction apparatus equipped with a stirrer and a thermometer, 103 parts by mass of polyoxytetramethylene glycol (weight molecular weight: 1800), 70 parts by mass of polybutylene adipate (weight molecular weight: 2000), 3 parts by mass of polyethylene glycol, and 103 parts by mass of 4,4'-diphenylmethane diisocyanate were allowed to react in 128 parts by mass of dimethylformamide under stirring at 60°C for 2 hours to provide a mixture of a polyurethane (A'-9) including an isocyanate group at a molecular end and methyl ethyl ketone.

Subsequently, 126 parts by mass of dimethylformamide and 21 parts by mass of ethylene glycol serving as a chain extender were added to the mixture under stirring and the resultant mixture was allowed to react at 60°C for 4 hours. After the ethylene glycol was added, 446 parts by mass of dimethylformamide was gradually added with an increase in the viscosity of the mixture; and the reaction was allowed to continue while the viscosity of the mixture was adjusted to thereby provide a urethane resin composition (IX) (non-volatile content: 30 mass%, viscosity: 15,000 mPa·s) containing a urethane resin (A-9) having a polyoxyethylene moiety and a weight-average molecular weight of 120,000 and dimethylformamide.

### (Formation of porous material and leather-like sheet)

A porous material (IX-1) and a leather-like sheet (IX-2) were formed in the same manner as in the (Formation of porous material and leather-like sheet) in Example 1 above except that the urethane resin composition (IX) was used instead of the urethane resin composition (I).

### [COMPARATIVE EXAMPLE 3]

### (Preparation of urethane resin composition (X))

In a reaction apparatus equipped with a stirrer and a thermometer, 214 parts by mass of polypropylene glycol (weight molecular weight: 2000) and 39 parts by mass of 4,4'-diphenylmethane diisocyanate were allowed to react in 330 parts by mass of dimethylformamide under stirring at 60°C for 2 hours to provide a mixture of a polyurethane (A'-10) including an isocyanate group at a molecular end and dimethylformamide.

Subsequently, 147 parts by mass of polyethylene glycol (weight molecular weight: 1540) was supplied to the mixture of the polyurethane (A'-10) and dimethylformamide and the resultant mixture was allowed to react at 70°C for 6 hours. After the reaction was completed, 159 parts by mass of dimethylformamide was supplied to the mixture to thereby provide a mixture (non-volatile content: 45 mass%) containing a urethane resin (A-10) having a weight-average molecular weight of 7,500 and dimethylformamide.

In a reaction apparatus equipped with a stirrer and a thermometer, 106 parts by mass of polyoxytetramethylene glycol (weight molecular weight: 1800), 70 parts by mass of polybutylene adipate (weight molecular weight: 2000), and 103 parts by mass of 4,4'-diphenylmethane diisocyanate were allowed to react in 128 parts by mass of dimethylformamide under stirring at 60°C for 2 hours to provide a mixture of a polyurethane (C'-3) including an isocyanate group at a molecular end and dimethylformamide.

Subsequently, 126 parts by mass of dimethylformamide and 24 parts by mass of ethylene glycol serving as a chain extender were added to the mixture under stirring and the resultant mixture was allowed to react at 60°C for 4 hours. After the ethylene glycol was added, 446 parts by mass of dimethylformamide was gradually added with an increase in the viscosity of the mixture; and the reaction was allowed to continue while the viscosity of the mixture was adjusted to thereby provide a mixture (non-volatile content: about 30 mass%) containing a urethane resin (C-3) having a weight-average molecular weight of 120,000 without a polyoxyethylene moiety and dimethylformamide.

Subsequently, 25 parts by mass of the mixture containing the urethane resin (A-9) and dimethylformamide was supplied to 975 parts by mass of the obtained mixture of the urethane resin (C-3) and dimethylformamide; and the resultant mixture was stirred to thereby provide a urethane resin composition (X) (non-volatile content: about 30 mass%, viscosity: 15,000 mPa·s, mass ratio [A-9/C-3] of the urethane resin (A-10) to the urethane resin (C-3) = 1/26) containing the urethane resin (A-10) having a weight-average molecular weight of 7,500, the urethane resin (C-3) having a weight-average molecular weight of 120,000, and dimethylformamide.

### (Formation of porous material and leather-like sheet)

A porous material (X-1) and a leather-like sheet (X-2) were formed in the same manner as in the (Formation of porous material and leather-like sheet) in Example 1 above except that the urethane resin composition (X) was used instead of the urethane resin composition (I).

### [Measurement method of weight-average molecular weight of urethane resins]

The number-average molecular weight of the urethane resins was measured with a gel permeation chromatograph (GPC; column; KD-806M (manufactured by SHOWA DENKO K. K.), eluent; dimethylformamide) in terms of polystyrene. In the measurement, dimethylformamide solutions of the urethane resins (non-volatile content; 0.4 mass%) were prepared and used.

### [Measurement method of viscosity of urethane resin compositions]

The viscosity of each urethane resin composition was measured in the following manner: 100 parts by mass of the urethane resin composition was placed in a glass vessel. The glass vessel was adjusted to be at 25°C by being immersed in a constant temperature water bath in which the water temperature was set at 25°C. The urethane resin composition was then measured with a digital viscometer TV-10 (manufactured by TOKISANGYO) at a measurement temperature of 25°C, at a rotational rate of 12 rpm, with a rotational rod having a lot No. 4.

### [Measurement method of moisture permeability]

The moisture permeability of the leather-like sheets obtained in the above-described manner was measured by a testing method for water vapour permeability based on A-1 method (calcium chloride method) in Japanese Industrial Standard JIS L1099-1993, and the measured values were converted into permeability in terms of 24 hours.

### [Evaluation method of surface appearance]

The surfaces of the porous materials constituting the leather-like sheets obtained in the above-described manner were observed with a scanning electron microscope (SEM) and inspected whether aggregate adhered to the surfaces of the porous materials or not.

### [Environmental friendliness]

A case where a porous material was formed by a wet method without using dimethylformamide was evaluated as "Good". A case where a porous material was formed without using dimethylformamide but by a dry method in which, for example, it is difficult to collect the organic solvent, was evaluated as "Fair". A case where a porous material was formed by using dimethylformamide and a case where a porous material was not formed, were evaluated as "Poor".

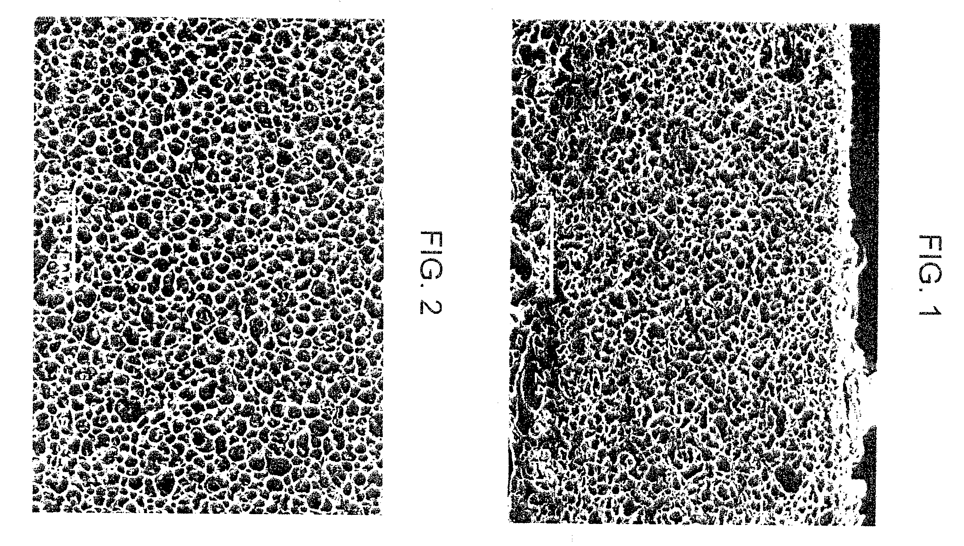

Fig. 1 is a photograph of a section of a porous material constituting the leather-like sheet obtained in Example 5, the photograph being taken with a scanning electron microscope (SEM) at a magnification of 500.

Fig. 2 is a photograph of the surface of the porous material constituting the leather-like sheet obtained in Example 5, the photograph being taken with a scanning electron microscope (SEM) at a magnification of 500.

Figs. 1 and 2 clearly show that a structure of a large number of pores (continuous pores) that are relatively uniform, fine, and in communication with each other is formed in the porous material obtained in Example 5.

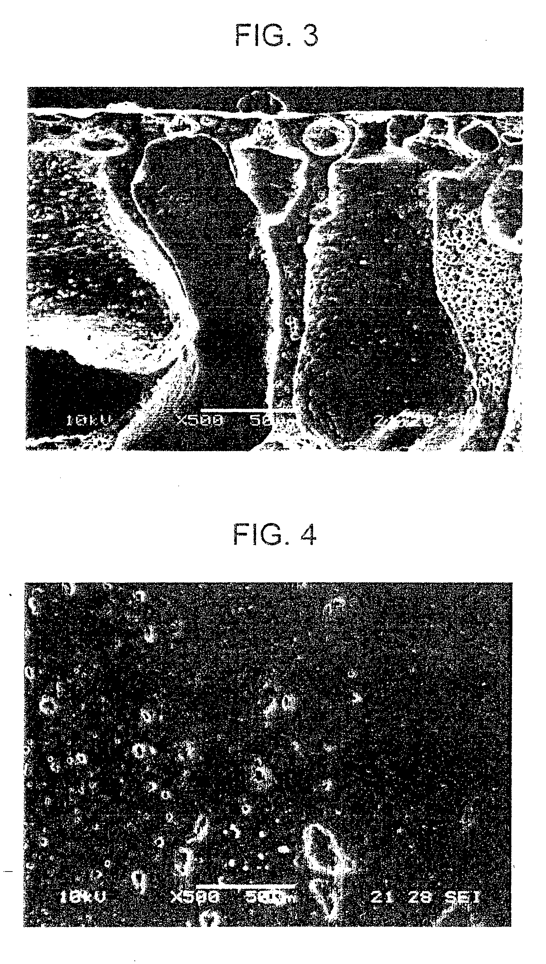

Fig. 3 is a photograph of a section of a porous material constituting the leather-like sheet obtained in Comparative example 2, the photograph being taken with a scanning electron microscope (SEM) at a magnification of 500.

Fig. 4 is a photograph of the surface of the porous material constituting the leather-like sheet obtained in Comparative example 2, the photograph being taken with a scanning electron microscope (SEM) at a magnification of 500.

Figs. 3 and 4 clearly show that longitudinal cavities (pores) are formed but a structure of a large number of pores (continuous pores) that are fine and in communication with each other is not formed in the porous material obtained in Comparative example 2.

**[Table 1]**

| Table 1 | Example 1 | Example 2 | Example 3 | Example 4 | Example 5 |
|---|---|---|---|---|---|
| Urethane resin (A) | A-1 300 parts by mass | A-2 300 parts by mass | A-3 300 parts by mass | A-4 300 parts by mass | A-5 11.25 parts by mass |
| Urethane resin (C) | - | - | - | - | C-1 292.5 parts by mass |
| Organic solvent (B) | MEK 670 parts by mass | Acetone 670 parts by mass | MEK 670 parts by mass | Acetone 670 parts by mass | MEK 667 parts by mass |
| Water | 30 parts by mass | 30 parts by mass | 30 parts by mass | 30 parts by mass | 29.25 parts by mass |
| Method for forming porous layer | Wet method | Wet method | Wet method | Wet method | Wet method |
| Moisture permeability (g/m²·24h) | 8900 | 8900 | 9500 | 9500 | 9600 |
| Surface appearance (presence or absence of aggregate) | Absent | Absent | Absent | Absent | Absent |
| Environmental friendliness | Good | Good | Good | Good | Good |

**[Table 2]**

| Table 2 | Example 6 | Example 7 | Comparative example 1 | Comparative example 2 | Comparative example 3 |
|---|---|---|---|---|---|
| Urethane resin (A) | A-6 11.25 parts by mass | A-7 300 parts by mass | A-8 300 parts by mass | A-9 300 parts by mass | A-10 11.25 parts by mass |
| Urethane resin (C) | C-2 292.5 parts by mass | - | - | - | C-3 292.5 parts by mass |
| Organic solvent (B) | Acetone 667 parts by mass | MEK 700 parts by mass | MEK 700 parts by mass | DMF 700 parts by mass | DMF 696.3 parts by mass |
| Water | 29.25 parts by mass | - | - | - | - |
| Method for forming porous layer | Wet method | Wet method | Dry method | Wet method | Wet method |
| Moisture permeability (g/m²·24h) | 9600 | 8900 | 8900 | 3800 | 3800 |
| Surface appearance (presence or absence of aggregate) | Absent | Absent | Present | Absent | Absent |
| Environmental friendliness | Good | Good | Fair | Poor | Poor |

## Claims

1. A method for producing a porous material, comprising coating or impregnating a surface of a base material with a urethane resin composition containing a urethane resin (A) including a polyoxyethylene moiety and an organic solvent (B) that is one or more selected from the group consisting of a ketone solvent and an ester solvent; and subsequently bringing the coated surface or the impregnated surface into contact with water or water vapor to wet-cure the urethane resin (A).

2. The method for producing a porous material according to Claim 1, wherein the urethane resin (A) has a weight-average molecular weight of 50,000 to 500,000.

3. The method for producing a porous material according to Claim 1, wherein the urethane resin (A) includes the polyoxyethylene moiety at a molecular end.

4. The method for producing a porous material according to Claim 1, wherein the urethane resin (A) is a urethane resin that includes the polyoxyethylene moiety at a molecular end and is produced by allowing a polyol (a1) containing one or more selected from the group consisting of a polyether polyol and a polyester polyol to react with a polyisocyanate (a2) to produce a urethane resin (A') including an isocyanate group at a molecular end and by allowing the urethane resin (A') to react with a polyoxyethylene alcohol (a3).

5. The method for producing a porous material according to Claim 1, wherein a content of the organic solvent (B) with respect to a total amount of an organic solvent contained in the urethane resin composition is 95 to 100 mass%.

6. The method for producing a porous material according to Claim 1 or 5, wherein the organic solvent (B) is one or more selected from the group consisting of methyl ethyl ketone, acetone, and ethyl acetate.

7. The method for producing a porous material according to Claim 1, wherein the urethane resin composition contains 50 to 80 mass% of the organic solvent (B) with respect to a total amount of the urethane resin (A).

8. The method for producing a porous material according to Claim 1, wherein the urethane resin composition further contains water and a content of the water with respect to a total amount of the organic solvent (B) and the water is 1 to 30 mass%.

9. A method for producing a porous material, comprising coating or impregnating a surface of a base material with a urethane resin composition containing a urethane resin (A) including a polyoxyethylene moiety, an organic solvent (B) that is one or more selected from the group consisting of a ketone solvent and an ester solvent, and a urethane resin (C) without a polyoxyethylene moiety; and subsequently bringing the coated surface or the impregnated surface into contact with water or water vapor to wet-cure the urethane resin (A) and the urethane resin (C).

10. The method for producing a porous material according to Claim 9, wherein the urethane resin (A) has a weight-average molecular weight of 5,000 to 20,000, and the urethane resin (C) has a weight-average molecular weight of 50,000 to 500,000.

11. The method for producing a porous material according to Claim 9, wherein a mass ratio [(A)/(C)] of the urethane resin (A) to the urethane resin (C) is in a range of 0.1/100 to 10/100.

12. The method for producing a porous material according to Claim 9, wherein the urethane resin (A) includes the polyoxyethylene moiety at a molecular end.

13. The method for producing a porous material according to Claim 9, wherein the urethane resin (A) is a urethane resin that includes the polyoxyethylene moiety at a molecular end and is produced by allowing a polyol (a1) containing one or more selected from the group consisting of a polyether polyol and a polyester polyol to react with a polyisocyanate (a2) to produce a urethane resin (A') including an isocyanate group at a molecular end and by allowing the urethane resin (A') to react with a polyoxyethylene alcohol (a3).

14. The method for producing a porous material according to Claim 9, wherein a content of the organic solvent (B) with respect to a total amount of an organic solvent contained in the urethane resin composition is 95 to 100 mass%.

15. The method for producing a porous material according to Claim 9 or 14, wherein the organic solvent (B) is one or more selected from the group consisting of methyl ethyl ketone and ethyl acetate.

16. The method for producing a porous material according to Claim 9, wherein the urethane resin composition contains 50 to 80 mass% of the organic solvent (B) with respect to a total amount of the urethane resin (A) and the urethane resin (C).

17. The method for producing a porous material according to Claim 9, wherein the urethane resin composition further contains water and a content of the water with respect to a total amount of the organic solvent (B) and the water is 1 to 30 mass%.

## Patentansprüche

1. Verfahren zur Herstellung eines porösen Materials, umfassend Beschichten oder Imprägnieren einer Oberfläche eines Basismaterials mit einer Urethanharzzusammensetzung, umfassend ein Urethanharz (A), umfassend eine Polyoxyethylenbaugruppe, und ein organisches Lösungsmittel (B), welches eines oder mehrere ist/sind, ausgewählt aus der Gruppe, bestehend aus einem Ketonlösungsmittel und einem Esterlösungsmittel; und nachfolgend Inkontaktbringen der beschichteten Oberfläche oder der imprägnierten Oberfläche mit Wasser oder Wasserdampf, um das Urethanharz (A) nass zu härten.

2. Verfahren zur Herstellung eines porösen Materials gemäß Anspruch 1, wobei das Urethanharz (A) ein gewichtsmittleres Molekulargewicht von 50.000 bis 500.000 besitzt.

3. Verfahren zur Herstellung eines porösen Materials gemäß Anspruch 1, wobei das Urethanharz (A) die Polyoxyethylenbaugruppe an einem Molekülende umfasst.

4. Verfahren zur Herstellung eines porösen Materials gemäß Anspruch 1, wobei das Urethanharz (A) ein Urethanharz ist, das die Polyoxyethylenbaugruppe an einem Molekülende umfasst, und dadurch hergestellt wird, dass man ein Polyol (a1), enthaltend eines oder mehrere, ausgewählt aus der Gruppe, bestehend aus einem Polyetherpolyol und einem Polyesterpolyol, mit einem Polyisocyanat (a2) unter Bildung eines Urethanharzes (A'), umfassend eine Isocyanatgruppe an einem Molekülende, reagieren lässt, und das Urethanharz (A') mit einem Polyoxyethylenalkohol (a3) reagieren lässt.

5. Verfahren zur Herstellung eines porösen Materials gemäß Anspruch 1, wobei der Gehalt des organischen Lösungsmittels (B) bezüglich der Gesamtmenge an in der Urethanharzzusammensetzung vorhandenem Lösungsmittel 95 bis 100 Massen%-beträgt.

6. Verfahren zur Herstellung eines porösen Materials gemäß Anspruch 1 oder 5, wobei das organische Lösungsmittel (B) eines oder mehrere ist/sind, ausgewählt aus der Gruppe, bestehend aus Methylethylketon, Aceton und Ethylacetat.

7. Verfahren zur Herstellung eines porösen Materials gemäß Anspruch 1, wobei die Urethanharzzusammensetzung 50 bis 80 Massen% des organischen Lösungsmittels (B) bezüglich der Gesamtmenge des Urethanharzes (A) enthält.

8. Verfahren zur Herstellung eines porösen Materials gemäß Anspruch 1, wobei die Urethanharzzusammensetzung des Weiteren Wasser enthält, und der Wassergehalt bezüglich der Gesamtmenge des organischen Lösungsmittels (B) und Wasser 1 bis 30 Massen% beträgt.

9. Verfahren zur Herstellung eines porösen Materials, umfassend Beschichten oder Imprägnieren einer Oberfläche eines Basismaterials mit einer Urethanharzzusammensetzung, umfassend ein Urethanharz (A), umfassend eine Polyoxyethylenbaugruppe, und ein organisches Lösungsmittel (B), welches eines oder nehrere ist/sind, ausgewählt aus der Gruppe, bestehend aus einem Ketonlösungsmittel und einem Esterlösungsmittel, und einem Urethanharz (C) ohne eine Polyoxyethylenbaugruppe; und nachfolgend Inkontaktbringen der beschichteten Oberfläche oder der imprägnierten Oberfläche mit Wasser oder Wasserdampf, um das Urethanharz (A) und das Urethanharz (C) nass zu härten.

10. Verfahren zur Herstellung eines porösen Materials gemäß Anspruch 9, wobei das Urethanharz (A) ein gewichtsmittleres Molekulargewicht von 5.000 bis 20.000 besitzt und das Urethanharz (C) ein gewichtsmittleres Molekulargewicht von 50.000 bis 500.000 besitzt.

11. Verfahren zur Herstellung eines porösen Materials gemäß Anspruch 9, wobei das Massenverhältnis [(A)/(C)] des Urethanharzes (A) zum Urethanharz (C) in dem Bereich von 0,1/100 bis 10/100 liegt.

12. Verfahren zur Herstellung eines porösen Materials gemäß Anspruch 9, wobei das Urethanharz (A) die Polyoxyethylenbaugruppe an einem Molekülende umfasst.

13. Verfahren zur Herstellung eines porösen Materials gemäß Anspruch 9, wobei das Urethanharz (A) ein Urethanharz ist, das die Polyoxyethylenbaugruppe an einem Molekülende umfasst, und dadurch hergestellt wird, dass man ein Polyol (a1), enthaltend eines oder mehrere, ausgewählt aus der Gruppe, bestehend aus einem Polyetherpolyol und einem Polyesterpolyol, mit einem Polyisocyanat (a2) unter Bildung eines Urethanharzes (A'), umfassend eine Isocyanatgruppe an einem Molekülende, reagieren lässt, und das Urethanharz (A') mit einem Polyoxyethylenalkohol '(a3) reagieren lässt.

14. Verfahren zur Herstellung eines porösen Materials gemäß Anspruch 9, wobei der Gehalt des organischen Lösungsmittels (B) bezüglich der Gesamtmenge an in der Urethanharzzusammensetzung vorhandenem Lösungsmittel 95 bis 100 Massen% beträgt.

15. Verfahren zur Herstellung eines porösen Materials gemäß Anspruch 9 oder 14, wobei das organische Lösungsmittel (B) eines oder mehrere ist/sind, ausgewählt aus der Gruppe, bestehend aus Methylethylketon und Ethylacetat.

16. Verfahren zur Herstellung eines porösen Materials gemäß Anspruch 9, wobei die Urethanharzzusammensetzung 50 bis 80 Massen% des organischen Lösungsmittels (B) bezüglich der Gesamtmenge des Urethanharzes (A) und des Urethanharzes (C) enthält.

17. Verfahren zur Herstellung eines porösen Materials gemäß Anspruch 9, wobei die Urethanharzzusammensetzung des Weiteren Wasser enthält, und der Wassergehalt bezüglich der Gesamtmenge des organischen Lösungsmittels (B) und Wasser 1 bis 30 Massen% beträgt.

## Revendications

1. Procédé de production d'un matériau poreux, comprenant les étapes consistant à revêtir ou imprégner une surface d'un matériau de base avec une composition de résine d'uréthane contenant une résine d'uréthane (A) comprenant une fraction poly(oxyéthylène) et un solvant organique (B) qui est un ou plusieurs éléments choisis dans le groupe consistant en un solvant cétone et un solvant ester ; et ensuite amener la surface revêtue ou la surface imprégnée en contact avec de l'eau ou de la vapeur d'eau pour réaliser une cuisson humide de la résine d'uréthane (A).

2. Procédé de production d'un matériau poreux selon la revendication 1, dans lequel la résine d'uréthane (A) a une masse moléculaire moyenne en masse de 50 000 à 500 000.

3. Procédé de production d'un matériau poreux selon la revendication 1, dans lequel la résine d'uréthane (A) comprend la fraction de poly(oxyéthylène) à une extrémité moléculaire.

4. Procédé de production d'un matériau poreux selon la revendication 1, dans lequel la résine d'uréthane (A) est une résine d'uréthane qui comprend la fraction poly(oxyéthylène) à une extrémité moléculaire et est produite en laissant un polyol (a1) contenant un ou plusieurs éléments choisis dans le groupe consistant en un poly(éther) polyol et un poly(ester) polyol, réagir avec un poly(isocyanate) (a2) afin de produire une résine d'uréthane (A') comprenant un groupe isocyanate à une extrémité moléculaire et en laissant la résine d'uréthane (A') réagir avec un alcool de poly(oxyéthylène) (a3).

5. Procédé de production d'un matériau poreux selon la revendication 1, dans lequel une teneur en solvant organique (B) par rapport à une quantité totale d'un solvant organique contenu dans la composition de résine d'uréthane est de 95 à 100% en masse.

6. Procédé de production d'un matériau poreux selon la revendication 1 ou 5, dans lequel le solvant organique (B) est un ou plusieurs éléments choisis dans le groupe consistant en la méthyl éthyl cétone, l'acétone et l'acétate d'éthyle.

7. Procédé de production d'un matériau poreux selon la revendication 1, dans lequel la composition de résine d'uréthane contient de 50 à 80% en masse du solvant organique (B) par rapport à une quantité totale de la résine d'uréthane (A).

8. Procédé de production d'un matériau poreux selon la revendication 1, dans lequel la composition de résine d'uréthane contient, en outre, de l'eau et une teneur en eau par rapport à une quantité totale du solvant organique (B) et de l'eau est de 1 à 30 % en masse.

9. Procédé de production d'un matériau poreux, comprenant les étapes consistant à revêtir ou imprégner une surface d'un matériau de base avec une composition de résine d'uréthane contenant une résine d'uréthane (A) comprenant une fraction poly(oxyéthylène), un solvant organique (B) qui est un ou plusieurs éléments choisis dans le groupe consistant en un solvant cétone et un solvant ester, et une résine d'uréthane (C) sans fraction poly(oxyéthylène) ; et ensuite amener la surface revêtue ou la surface imprégnée en contact avec l'eau ou la vapeur d'eau pour réaliser une cuisson humide de la résine d'uréthane (A) et de la résine d'uréthane (C).

10. Procédé de production d'un matériau poreux selon la revendication 9, dans lequel la résine d'uréthane (A) a une masse moléculaire moyenne en masse de 5 000 à 20 000, et la résine d'uréthane (C) a une masse moléculaire moyenne en masse de 50 000 à 500 000.

11. Procédé de production d'un matériau poreux selon la revendication 9, dans lequel un rapport en masse [(A)/(C)] entre la résine d'uréthane (A) et la résine d'uréthane (C) est dans une plage de 0,1/100 à 10/100.

12. Procédé de production d'un matériau poreux selon la revendication 9, dans lequel la résine d'uréthane (A) comprend le fragment de poly(oxyéthylène) à une extrémité moléculaire.

13. Procédé de production d'un matériau poreux selon la revendication 9, dans lequel la résine d'uréthane (A) est une résine d'uréthane qui comprend la fraction poly(oxyéthylène) à une extrémité moléculaire et est produite en laissant un polyol (a1) contenant un ou plusieurs éléments choisis dans le groupe consistant en un poly(éther) polyol et un poly(ester) polyol, réagir avec un poly(isocyanate) (a2) afin de produire une résine d'uréthane (A') comprenant un groupe isocyanate à une extrémité moléculaire et en laissant la résine d'uréthane (A') réagir avec un alcool de poly (oxyéthylène) (a3).

14. Procédé de production d'un matériau poreux selon la revendication 9, dans lequel une teneur en solvant organique (B) par rapport à une quantité totale d'un solvant organique contenu dans la composition de résine d'uréthane est de 95 à 100 % en masse.

15. Procédé de production d'un matériau poreux selon la revendication 9 ou 14, dans lequel le solvant organique (B) est un ou plusieurs éléments choisis dans le groupe consistant en la méthyl éthyl cétone et l'acétate d'éthyle.

16. Procédé de production d'un matériau poreux selon la revendication 9, dans lequel la composition de résine d'uréthane contient 50 à 80 % en masse du solvant organique (B) par rapport à une quantité totale de la résine d'uréthane (A) et la résine d'uréthane (C).

17. Procédé de production d'un matériau poreux selon la revendication 9, dans lequel la composition de résine d'uréthane comprend, en outre, de l'eau et une teneur en eau par rapport à une quantité totale du solvant organique (B) et l'eau est de 1 à 30 % en masse.
